# EUROPEAN PATENT SPECIFICATION

(11) **EP 2 663 158 B1**
(45) Date of publication and mention of the grant of the patent: **16.08.2017**
(21) Application number: 12360033.0
(22) Date of filing: 10.05.2012
(51) Int. Cl.: H04W 92/20, H04W 24/02, H04W 40/02, H04L 12/741, H04W 36/04, H04W 80/04

(54) **Transferring messages**
Übertragung von Nachrichten
Transfert de messages

(43) Date of publication of application: 13.11.2013
(73) Proprietor: ALCATEL LUCENT, 92100 Boulogne-Billancourt (FR)
(72) Inventor: Godin, Philippe, 78220 Viroflay (FR)
(74) Representative: Berthier, Karine

(56) References cited:
- ERICSSON: "X2 SCTP Concentrator Concept â TP for H(e)NB Mobility TR", 3GPP DRAFT; R3-120852, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. San JosÃ CR del Cabo, Mexico; 20120326 - 2012033, 30 March 2012 (2012-03-30), XP050610873, [retrieved on 2012-03-30]
- ERICSSON: "Autonomous X2 Setup through an SCTP Concentrator", 3GPP DRAFT; R3-120736, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. San JosÃ CR del Cabo, Mexico; 20120326 - 2012033, 17 March 2012 (2012-03-17), XP050610756, [retrieved on 2012-03-17]
- ERICSSON ET AL: "SCTP Concentrator: A Simple Solution to a Debated Problem", 3GPP DRAFT; R3-120321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Dresden, Germany; 20120206 - 20120210, 31 January 2012 (2012-01-31), XP050566742, [retrieved on 2012-01-31]
- NOKIA SIEMENS NETWORKS (RAPPORTEUR): "X2-proxy", 3GPP DRAFT; R3-120437 X2-PROXY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Dresden, Germany; 20120206 - 20120210, 10 February 2012 (2012-02-10), XP050566849, [retrieved on 2012-02-10]
- NOKIA SIEMENS NETWORKS ET AL: "Further clarification on X2-proxy", 3GPP DRAFT; R3-120607 X2-PROXY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. San Jose del Cabo, Mexico; 20120326 - 20120330, 16 March 2012 (2012-03-16), XP050610571, [retrieved on 2012-03-16]

## Description

### FIELD OF THE INVENTION

The present invention relates to a method of transferring messages between base stations of a wireless telecommunications network, a proxy node, a method of transmitting messages from a base station, a base station and computer program products.

### BACKGROUND

Transmitting messages between base stations of a wireless telecommunications network is known. For example, in long term evolution (LTE) networks, messages are sent direct between base stations using an X2 interface. A typical method to establish the X2 interface is, first a cell is detected, typically by user equipment, and reported to a serving base station in a user report. The serving base station then passes the cell identifier to the network, which returns an IP address of the target base station supporting the detected cell. The serving base station then establishes a Stream Control Transmission Protocol (SCTP) connection or "Association" between the two base stations. The X2 interface is then established between the source and target base station over this SCTP connection and enables messages to be transferred between the two base stations.

In addition to macro cells provided by macro base stations, other types of cells and base stations may be provided within the wireless telecommunications network. One such example of such a base station is a small cell base station. Such a small cell base station typically provides coverage using a small cell which has a relatively limited range typically within the coverage area of a macro cell. The transmission power of a small cell base station is relatively low and hence the small cell provides a small coverage area covering, for example, an office or a home.

Such small cells are typically provided where the communications coverage provided by macro cell is poor or where a user wishes to use an alternative communications link provided locally, by the small cell base station, to communicate with the core network.

The deployment of such small cells can have unexpected consequences, particularly with regard to scalability, when transmitting messages between base stations.

3GPP TSG-RAN WG3 #75bis R3-120852, 3GPP TSG-RAN WG3 #75bis R3-120736 and 3GTPP TSG-RAN WG3 #75 R3-120321 each disclose an X2 SCTP concentrator concept.

The concentrator maps signalling onto the appropriate SCTP stream. The concentrator reads the address from the SCTP INIT chunk in the SCTP message and the X2 message is then mapped to an SCTP stream.

3GPP TSG-RAN WG3 #75 R3-120437 and 3GPP TSG-RAN WG3 #75bis R3-120607 disclose an X2 proxy arrangement. An SCTP association is set up between base stations and a gateway. the X2 set-up request message received by the gateway is logically terminated and a new X2 set-up request message is generated towards eNB1.

Accordingly, it is desired to provide an improved technique for transmitting messages between base stations.

### SUMMARY

According to a first aspect, there is provided a method as claimed in claim 1.

The first aspect recognizes that a problem with the proliferation of cells, and particularly small cells, within the network is that the number of direct links between base stations increases. This is because typically each base station sets up and maintains a dedicated link between it and each of its neighbouring base stations. Typically, a single SCTP connection is made between a base station and a neighbour over which an X2 interface is established. As the number of neighbours increases, so does the number of a separate SCTP connections and overlying X2 interfaces. This leads to a drain on resources within the base station due to the need to maintain each of these connections and existing standards did not envisage that such a large number of connections may be necessary. Although different techniques have been proposed to attempt to address this problem, the first aspect recognises that they each have their own drawbacks, typically due to being inconsistent with protocols defined it by third-party standards or due to complexity in the processing required to implement those technique.

In particular, two kinds of proxy have been presented so far in the 3GPP standards to solve this problem. The first type of proxy is similar to the one defined in release 10 to handle Relay Nodes. This type of proxy hides the small cell or home base stations (HeNBs) from the macro base station (eNB) so that for the macro eNB it sees the proxy like a neighbour macro eNB featuring a lot of cells (which are the HeNBs). In this first kind of proxy, all X2AP messages are therefore terminated in the proxy. This solution presents high complexity for the proxy because it terminates all X2AP messages, interprets them and maintains corresponding X2 contexts on two sides, it also has to keep memory of the neighbouring relationship status between the macro eNB and the HeNBs which can be frequently updated, and finally the simultaneous handling of both direct and via-proxy X2 connections by the macro eNB introduces new complexity. This first solution also introduces changes in current macro eNB and HeNB behaviour. The second type of proxy has been recently introduced as a kind of SCTP concentrator. To an extreme opposite of the first solution mentioned above, that concentrator aims at not terminating at all the X2AP protocol in the proxy. It therefore entirely relies on an SCTP stream mapping solution whereby the macro eNB draws one (or several) SCTP association(s) to the proxy and over that SCTP association uses one stream (or pair of SCTP streams) to address one particular neighbour HeNB. On the HeNB side, one HeNB is still being addressed by one SCTP association as per release 8/9/10 model. That second solution presents severe shortcomings at transport level. Also, this kind of SCTP concentrator doesn't exist on the market today and would have to be fully developed. Also it is incompatible with an RFC-compliant SCTP stack as per RFC4960. When the macro eNB has already setup its SCTP association to the proxy and discovers a new neighbour HeNB, it is undefined or technically challengeable how it could request the proxy to trigger the setup of the X2 SCTP association towards the HeNB without having the proxy terminating the X2AP protocol. In the other direction, when the HeNB discovers a macro eNB it is undefined or technically challengeable how the proxy can add a new SCTP stream over the SCTP association between the proxy and the macro eNB and how the macro eNB can identify the mapping between the SCTP stream and the HeNB ID. Overall the SCTP stream management remains a real problem in that solution considering also that very dynamic SCTP stream management is needed based on discovery/removal of HeNB neighbour relationships particularly as current SCTP standards envisage that the range of streams to be used is only negotiable at SCTP initiation setup.

Accordingly, a method of transferring messages between base stations of a wireless telecommunications network is provided. The method may comprise the step of receiving an incoming X2 application protocol message within an X2 interface IP packet over an SCTP connection from a source base station. The method may also comprise the step of extracting, from the incoming X2 interface IP packet, target base station identity information which identifies a target base station. The method may also comprise the step of routing or transferring the X2 application protocol message to the target base station. The X2 protocol application message may be carried within an outgoing X2 interface IP packet which has a target IP address which is derived from the target base station identity information.

This approach uses a modified X2 application protocol message which includes the target base station identity information and which is wrapped within an X2 interface IP packet. This enables the modified message to be received by a proxy and the IP address of the target base station easily derived so that the message may be relayed onto a target base station with minimal processing being required by the proxy. Also, the same single SCTP connection between the source base station and the proxy can be used to carry X2 application protocol messages to the proxy for any number of target base stations. This significantly simplifies the processing and resources required within the source base station and the proxy. In addition, the proxy can utilize the same single SCTP connection with the target base station to transfer messages with the target base station for any number of different macro base stations. Again, this simplifies the processing and resources required in the target base station and the proxy. Furthermore, the extraction of the target base station identity information and generation of the outgoing message can still effectively be done within the X2 protocol layer which significantly reduces the processing and resources required from the proxy, which can remain effectively stateless and can use an RFC-compliant SCTP stack. The method enables a direct X2AP association to remain defined end to end between the source and the target base station without terminating the full X2 Application Protocol in the proxy which makes the proxy simple and without corresponding statefull X2 contexts. All of this improves the flexibility, reliability and scalability of establishing and maintaining connections between base stations compared to existing techniques.

In one embodiment, the step of receiving comprises receiving the incoming X2 Application Protocol message at a proxy node having an IP address included within the X2 interface IP packet carrying the incoming X2 Application Protocol message. Hence, the X2 application protocol message is sent by the source base station to the IP address of the proxy.

In one embodiment, the step of extracting comprises extracting the target IP address from the target base station identity information and the step of routing or transferring comprises routing the X2 Application Protocol message carried within the outgoing X2 interface IP packet having the target IP address for transmission to the target base station. Hence, the X2 application protocol message is sent by the proxy to the IP address of the target base station.

In one embodiment, the method comprises the step of maintaining a lookup table matching a target base station identity information with a corresponding target base station IP addresses, the step of routing or transferring comprises identifying the target IP address from the lookup table using the target base station identity information and routing or transferring the X2 Application Protocol message carried within the outgoing X2 interface IP packet having the target IP address for transmission to the target base station.

In one embodiment, the method comprises the step of querying an external lookup table to obtain the target base station IP address in response to providing the target base station identity information.

In one embodiment, the method comprises the step of receiving the target base station IP address for inclusion in the lookup table during transfer of S1 interface messages with the target base station.

In one embodiment, the step of extracting comprises decoding the incoming X2 interface IP packet containing the X2 Application Protocol message in accordance with a light layer protocol to extract the target base station identity information.

In one embodiment, the step of extracting comprises decoding the incoming X2 interface IP packet containing the X2 Application Protocol message in accordance with a light layer protocol to extract the target IP address.

The method comprises the step of maintaining a direct X2 Application Protocol association between the source base station and the target base station, the X2 Application Protocol association is being carried over two SCTP associations, one from the source base station to the proxy node and one from the proxy node to the target base station.

In one embodiment, the method comprises the step of maintaining an SCTP association with the source base station and a separate SCTP association with the target base station.

In one embodiment, the method comprises the step of establishing an SCTP association with the target base station on receipt of the incoming X2AP interface message.

According to a second aspect, there is provided a proxy as claimed in claim 7.

In one embodiment, the reception logic is operable to receive the incoming X2 Application Protocol message at a proxy node having an IP address included within the X2 interface IP packet carrying the incoming X2 Application Protocol message.

In one embodiment, the extraction logic is operable to extract the target IP address from the target base station identity information and the routing logic is operable to route the X2 Application Protocol message carried within the outgoing X2 interface IP packet having the target IP address for transmission to the target base station.

In one embodiment, the proxy comprises a lookup table matching a target base station identity information with a corresponding target base station IP addresses and wherein the routing logic is operable to identify the target IP address from the lookup table using the target base station identity information and to generate the X2 Application Protocol message carried within the outgoing X2 interface IP packet having the target IP address for transmission to the target base station.

In one embodiment, the reception logic is operable to receive the target base station IP address for inclusion in the lookup table during transfer of S1 interface messages with the target base station.

In one embodiment, the extraction logic is operable to decode the incoming X2 interface IP packet containing the X2 Application Protocol message in accordance with a light layer protocol to extract the target base station identity information.

In one embodiment, the extraction logic is operable to decode the incoming X2 interface IP packet containing the X2 Application Protocol message in accordance with a light layer protocol to extract the target IP address.

The proxy comprises interface logic operable to maintain a direct X2 Application Protocol association between the source base station and the target base station, the X2 Application Protocol association is being carried over two SCTP associations, one from the source base station to the proxy node and one from the proxy node to the target base station.

In one embodiment, the proxy comprises interface logic operable to maintain an SCTP association with the source base station and a separate SCTP association with the target base station.

In one embodiment, the interface logic is operable to establish an SCTP association with the target base station on receipt of the incoming X2AP interface message.

According to a third aspect, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 provides an overview of a proxy technique according to one embodiment;
Figure 2 shows a Logical Architecture with an X2 proxy function;
Figure 3 shows a logical network architecture for an SCTP concentrator;
Figure 4 shows a logical network architecture according to one embodiment;
Figure 5 illustrates a basic X2 setup procedure according to one embodiment; and
Figure 6 illustrates a handover procedure according to one embodiment;

### DESCRIPTION OF THE EMBODIMENTS

### Overview

Before discussing embodiments in any more detail, first an overview will be provided. As mentioned above, the dense deployment of small cell base stations can lead to a high number of such small cell base stations being identified as neighbours to a macro base station (for example, there may be several hundred or even thousands of small cell neighbours). The X2 interface is used for communication between neighbouring base stations and establishing and maintaining such a number of X2 connections can become challenging for a macro base station, in particular with regard to establishing and maintaining this number of SCTP associations with each of the neighbours.

Accordingly, a technique is provided which utilises a new type of X2 Application Protocol (X2AP) message which includes a new information element termed a target base station identifier. This new type of X2AP message may either be a modified X2AP message which includes the new information element, or may be an IP packet generated in response to a light protocol layer between the SCTP layer and the X2AP layer which incorporates the original X2AP message within the payload of the message generated by the light protocol layer and which adds the target base station identifier.

In either event, the modified X2AP message is transmitted to a network node designated by the network. The network node is designated by the network using S1 signalling. In particular, the network may provide the IP address of any small cell gateway that exists which may provide routing, forwarding or proxy functionality, as will be described in more detail below, or may provide the IP address of another network node that provides this functionality (should this functionality not be present in the small cell gateway or should no small cell gateway be present). Alternatively, the network may provide the IP address of the target small cell base station itself so that direct connections may also still be established, if required.

In this approach, when using some form of proxy, whether that is in the small cell gateway or elsewhere, this proxy is used as a router at the X2AP level for routing of X2AP messages. In contrast to other approaches, this enables the macro base station to continue to see and create an X2AP association or connection with individual small cell base stations and can therefore handle the X2AP relations in a similar way as that which currently exists. Contrary to other approaches, no specific mapping onto designated SCTP streams provided by the macro base station is required to be able to address a particular small cell base station. Instead, the small cell base station is addressed at the X2AP level by a specific identifier to enable the proxy to perform the correct routing. In contrast to the solutions which use SCTP stream mapping, in this technique the proxy terminates the X2AP protocol, but only for routing purposes, and so enables an X2AP association or connection to be maintained end-to-end between the macro base station and the small cell base station. This approach thus makes the proxy almost stateless and much simpler than approaches which rely on stream mapping and disruption of a RFC-compliant SCTP stack. This approach also makes the proxy almost stateless and much simpler than approaches which instead completely terminate all X2AP messages in the proxy, interprets all X2AP messages, keeps corresponding X2 contexts on both sides and then generates new X2AP messages for the intended small cell base station. Embodiments simply utilise the necessary identifiers to address the small cell base station neighbours, together with the ability to use the IP address of the proxy when communicating with a base station connected to that proxy. This approach is also compatible with the use of IPSEC to setup secure tunnels to a small cell gateway at the transport level if needed.

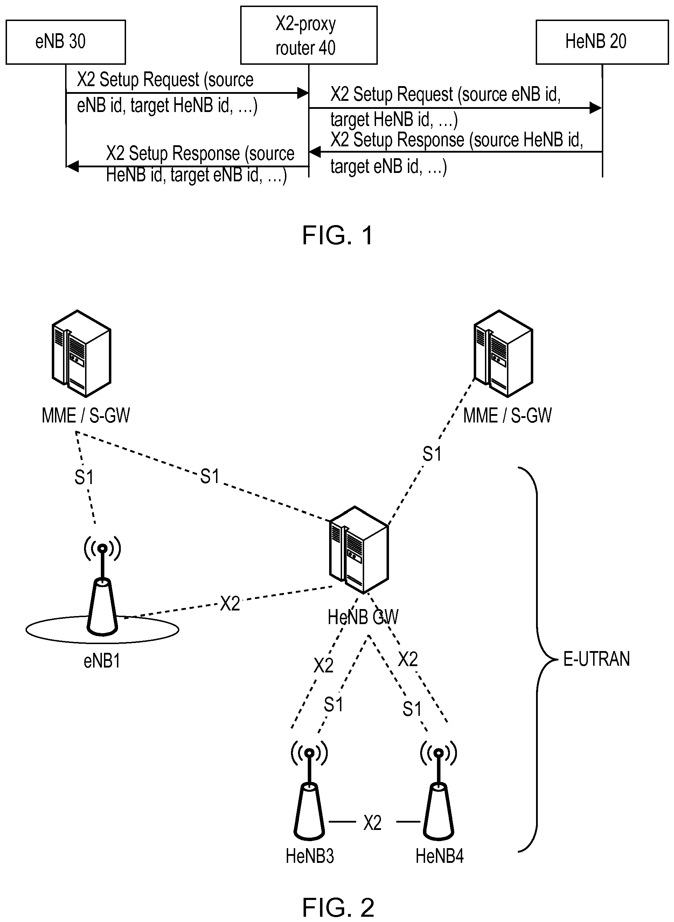

Figure 1 provides an overview of this proxy technique. In this example, a cell of neighbouring target base station 20 has been identified, typically by way of user equipment reports to the macro base station 30 provided by user equipment (not shown). Using the S1 interface, the macro base station reports the cell identifier of the detected cell and/or corresponding target base station 20 to the network. In accordance with normal techniques, the IP address of the target base station is identified by the network. If it is determined that the target base station 20 is to be communicated with using a proxy 40, then the network returns the IP address of the proxy 40, or may return the IP address of the proxy 40 as well as the IP address of the target base station 20 using S1 signalling or may return using S1 signalling the IP address of the proxy 40 as well as any (routing) information element further enabling that proxy to derive the IP address of the target base station 20. If no proxy 40 is to be used, then the IP address of the target base station 20 is returned by the network.

The macro base station 30 then generates a setup request which includes additional routing information elements to be incorporated in a modified X2AP setup request message. In this example, the modified X2AP setup request message incorporates an identifier of the target base station 20 so that the proxy 40 is able to route that X2AP setup request message to that target base station 20 by only decoding the additional information element which includes the target base station identifier. In particular, the macro base station 30 transmits the modified X2AP setup request message to the IP address of the proxy 40 provided by the network.

On receipt of that modified X2 setup request message, the proxy 40 decodes the information element containing the target base station identifier and then derives the IP address of the target base station 20 either directly from the target base station identifier or by reference to a look-up table which maintains a linking between the target base station identifier and the target base station IP address.

The proxy 40 then forwards the X2AP setup request message to the IP address of the target base station 20. As can be seen, the X2AP setup procedure remains end-to-end between the source macro base station 30 and the target base station 20 in contrast to previous approaches. This simplifies the operation of the proxy 40 and introduces fewer changes to the nodal behaviour of the involved base stations.

In response, the base station 20 will generate a similar modified X2AP setup response message which includes a target base station identifier of the macro base station 30 similar to that described above. This X2AP setup response message is sent to the IP address of the proxy 40. Again, the proxy 40 identifies the IP address of the target macro base station 30 either from the target base station identifier itself or through a look-up table maintained by the proxy 40. The proxy 40 then forwards the X2AP setup response message to the IP address of the macro base station 30.

It will be appreciated that the proxy 40 may also reformat the modified X2AP messages prior to forwarding in order to match existing X2AP messages in order to maintain backwards compatibility with legacy equipment.

It will be appreciated that the modified X2AP messages may incorporate the target base station identifiers in a variety of different ways. One approach is to add a further information element to the existing X2AP message, which is then interpreted by the proxy 40. Another approach is to encode the existing X2AP message in accordance with a very light protocol between the SCTP layer and the X2AP layer in a way which incorporates the target base station identifier. For example, the X2 Application Protocol message may be carried within an X2 interface IP packet as a payload of the light protocol layer which incorporates the target base station identifier. Either way, the proxy 40 is configured to perform the required decoding operation in order to extract the target base station identifier in order to be able to derive the target base station IP address.

Using this approach, the X2 procedure remains end-to-end between the source base station and the target base station, in contrast to some existing approaches. This simplifies the proxy 40 and also introduces fewer changes to the nodal behaviour of the base stations.

It will be appreciated that the proxy 40 may either trigger an SCTP association setup with the target base station if such an association does not exist when receiving the X2AP setup request message from the macro base station 30, or the small cell base station 20 can set up this association in advance, once it has been informed that it has been detected by the macro base station 30 by the network.

The following discusses embodiments in more detail.

### Introduction

The introduction of an X2 proxy between macro base stations (eNBs) & small cell or home base stations (HeNBs) has been the subject of numerous discussions over the last few 3GPP RAN3 meetings and there are currently two proposed solutions:
1. Adoption of a full X2 Proxy solution on the small cell or home base station gateway (HeNB-GW) as outlined in reference [1] & [2] similar to the one implemented in the DeNB for relay.
2. Adoption of an SCTP Concentrator proxy function as outlined in reference [3]

However both proposals have issues which are summarized below. Hence it is worthwhile looking to introduce an alternative solution which would not have those issues. This document outlines such an alternative.

### Discussion

### Overview of the two existing proxy solutions

One of the current proposals to support an X2 interface between eNBs & HeNBs proposes the introduction of a full X2 proxy function on the HeNB-GW, see reference [1], resulting in the network architecture shown in Figure 2 which shows an EUTRAN HeNB Logical Architecture with X2 proxy function in HeNB-GW.

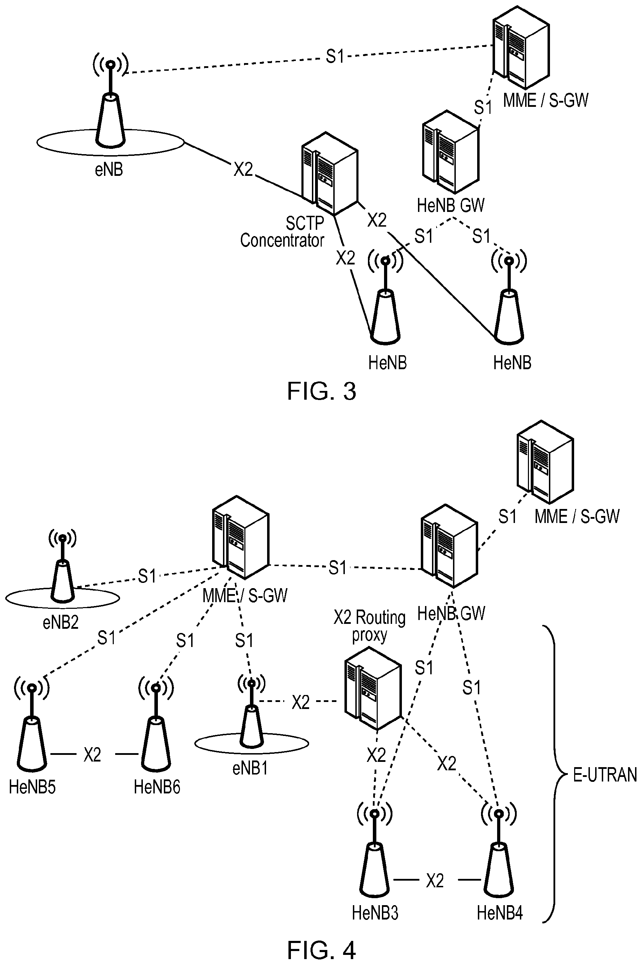

An alternative solution described in reference [3] proposes the introduction of an SCTP Concentrator proxy function as shown in Figure 3 which shows a logical network architecture for an SCTP concentrator.

As can be seen from Figures 2 and 3, the two solutions are not complementary since one requires the deployment of an HeNB-GW, whereas the other does not. In addition there are a number of issues with both options as follows:
The full X2-Proxy function has a number of drawbacks including:
   1. Mandating the deployment of an HeNB-GW regardless of whether the macro eNB is sufficiently dimensioned to be able to support X2 connections directly to neighbouring HeNBs.
   2. Requiring the termination of X2 procedures in the HeNB-GW, which adds to the complexity of the HeNB-GW, effectively requiring it to be sufficiently dimensioned to be able to support X2 connections between all HeNBs that it "manages" and all macro eNBs that any of the HeNBs might need to exchange X2 messages with.
   3. Utilising information from certain X2 messages incorrectly. For example in the X2 Setup Request message the HeNB-GW has to rely on the source eNB/HeNB populating the neighbour information elements (IEs) differently, so that the HeNB-GW can use this information to determine the actual target eNB/HeNB. It can be argued that this is incorrectly using the neighbour information, as the intention is not to use this for routing purposes, but to allow the source & target eNBs/HeNBs to exchange information about all their neighbouring cells.
   4. Requiring the maintenance of a neighbour cell list in the HeNB-GW, to be able to determine which HeNBs need to be updated when an existing NCL changes. More precisely, the HeNB GW needs to maintain duplicates of all neighbour relation tables of the connected eNBs and HeNBs. More generally, this requires storing X2 contexts for all connected base stations.
   5. Requiring the implementation of an X2AP ID management scheme in the HeNB-GW to allow new X2AP IDs to be allocated and tracked against HeNB & eNB Ids.
   6. Implementing new and complex logic where, for example, receiving an X2 setup request must lead to the generation of a completely different X2 eNB Configuration Update message.

The SCTP Concentrator proxy function also has a number of drawbacks including:
1. Relying on the maintenance of a 1-2-1 mapping between SCTP streams on either side of the concentrator. This limits flexibility, since in theory the source eNB could use a single SCTP stream for all "X2 traffic" towards HeNBs handled by the concentrator.
2. Implying that on creation of the SCTP association between eNB & concentrator, that the eNB would have to request enough streams for all HeNBs handled by the concentrator, which in theory would be the maximum possible, i.e. 2**16 for each association, even if the eNB only needs to communicate with a handful of HeNBs. This means a lot of streams to potentially be handled by the concentrator.
3. Requiring a non-standard SCTP implementation on both the source eNB/HeNB and the concentrator. Although the INIT chunk allows the sender to provide multiple IP Addresses, this is used to support multi-homing between the sender and receiver, and not to provide an additional IP Address to identify a "distant" peer. Therefore a proprietary implementation would have to be designed and implemented so that both the sender (eNB/HeNB) and receiver (concentrator) utilise the relevant chunk payload appropriately.

### X2 Routing Proxy alternative

Given the drawbacks of both current proposals it is worth considering another alternative solution that would support X2 between eNBs & HeNBs independently of whether an HeNB-GW was present (or indeed needed) or not. Such a solution would provide flexibility to satisfy various deployment requirements. This would introduce the logical function, the X2 Routing Proxy that may be implemented in an HeNB GW or not. Figure 4 illustrates the applicable network architecture with the proposed solution and shows a logical network architecture according to one embodiment.

The following provides more details of how such a solution would be implemented, highlighting certain key scenarios.

### X2 Setup

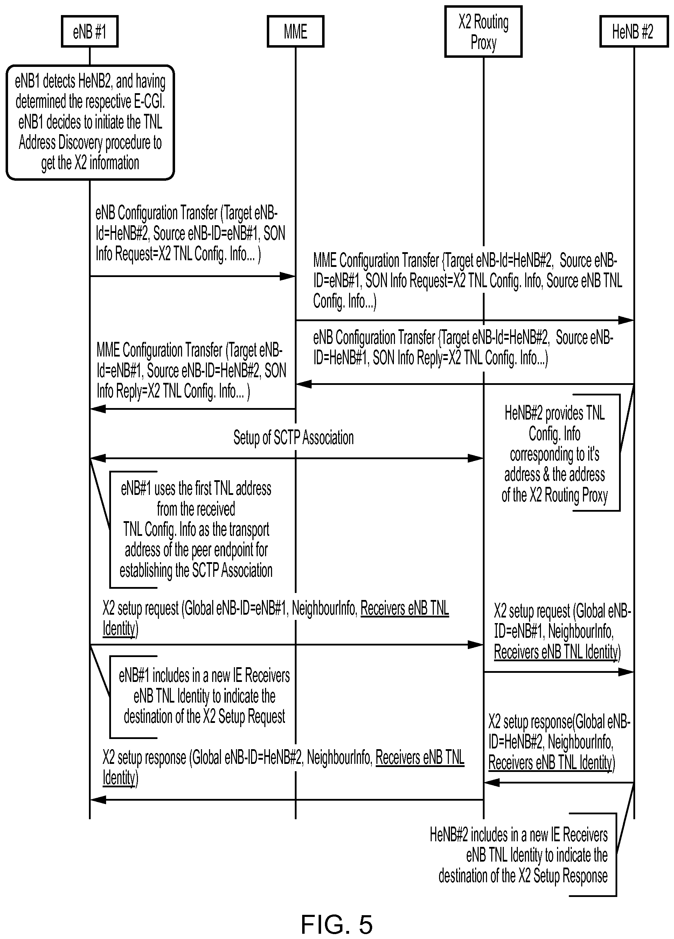

One of the key scenarios to consider is how an X2 connection could be established between eNB & HeNB. The Figure 5 illustrates the "basic" X2 setup procedure, i.e. when an eNB detects (or is configured with information about) a neighbouring HeNB.
In particular, Figure 5 shows how embodiments would work when the X2 Routing Proxy function is deployed.

The main steps shown in the Figure 5 are as follows.
1. eNB#1 detects HeNB#2.
2. eNB#1 then requests information about HeNB#2 via the S1AP eNB/MME Configuration Transfer procedures, which are sent via the MME to HeNB#2.
3. HeNB#2 provides two sets of TNL config. Info in the Configuration Transfer response, the first provides TNL info. of the X2 Routing Proxy, the second is TNL info. of HeNB#2 itself.
4. Once eNB#1 has received information about HeNB#2, it setups an SCTP Association to the X2 Routing Proxy using the TNL Configuration Information received..
5. Once an SCTP association is established, eNB#1 sends an X2 Setup Request to the peer node. To avoid having to implement special behaviour with respect to populating neighbour cell information in the X2 message a new IE, the Receivers eNB TNL identity is introduced. This new IE allows the X2 Routing Proxy to determine where to send the X2 message to.
6. Once HeNB#2 receives the X2 Setup Request it responds with an X2 Setup Response, and as for the Setup Request a new IE the Receivers eNB TNL identity is included (which is set to identify eNB#1)

The same scenario will be repeated if the eNB subsequently decides to establish an X2 to another HeNB. Similarly if the source is an HeNB and the target an eNB, the procedure is the same.

Similarly, the X2 Setup Failure message will require new IEs to identify both the source & target eNB/HeNB.

### Other X2 procedures

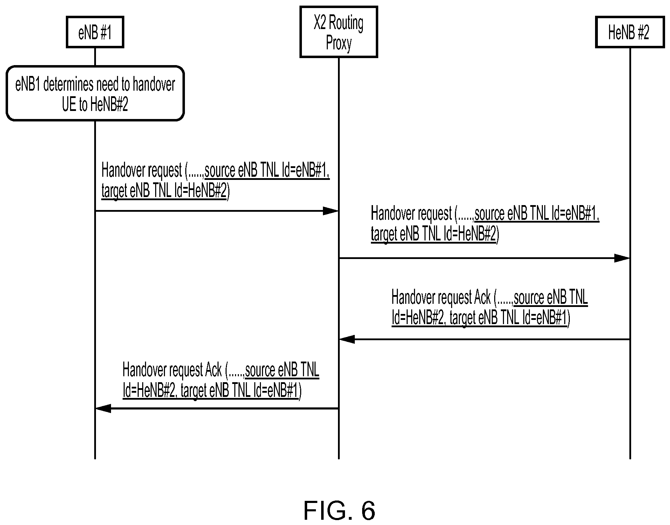

In order to ensure in the case when an X2 Routing Proxy is deployed that the behaviour of the Proxy is kept simple & transparent, new "routing" IEs (to identify the source/target eNB) would also be introduced to other X2 messages that do not currently support such information. Whilst this would therefore require the addition of Source & Target eNB-ID TNL identity IEs to the X2 messages, it would result in a consistent & coherent implementation on the X2 Routing proxy. An example being the Handover procedure shown in Figure 6.

### Summary

As can be seen from the information above, the proposed new solution is simple, in that it only requires the addition of "routing" IEs in the X2 messages and some basic new functionality on the eNB/HeNB. The X2 Routing Proxy functionality is the ability to "route" messages based on received IEs.

This solution has advantages over the existing proposals including:
- That it will work in various network architectures
- There is no need to implement additional functionality on the HeNB-GW to manage non-UE related X2 procedures
- There is no need to maintain neighbour cell mappings on the HeNB-GW
- There is no need to manage X2AP IDs on the HeNB-GW
- The solution does not require MME changes
- There is no need to implement non-standard SCTP

### Conclusion and proposals

This shows that an alternative solution is possible to support the introduction of an X2 proxy between eNBs & HeNBs. The solution provides an eNB/HeNB implementation that does not mandate the deployment of an HeNB-GW. In addition, the complexity of the X2 routing proxy function is as its name suggests merely a routing function. It also reduces the changes to be implemented in an eNB/HeNB compared to the two existing solutions.

### References

[1]. R3-120138 - X2-proxy - NSN et al
[2]. R3-120607 - Further Clarification on X2 Proxy - NSN et al
[3]. R3-120852 - X2 SCTP Concentrator Concept - TP for H(e)NB Mobility TR - Ericsson

Accordingly, it can be seen that in embodiments a single SCTP association is created between the macro base station and the proxy 40. In addition, a single SCTP association is provided between the proxy and every supported target small cell. However, the single SCTP association between the macro base station and the proxy is re-used for every X2AP message directed to the proxy 40, but that the proxy 40 then routes that X2AP message over the single SCTP association with the target small cell base station. Accordingly, an SCTP termination occurs within the proxy, but the X2AP association (and all X2 procedures) extends from the source base station to the target base station.

Also, it can be seen that this approach relieves the burden on the macro base station of needing to sustain tens, hundreds or more SCTP associations over the X2 interface if it wants to address a large number of base stations such as small cell base stations. This approach enables a more simplified proxy to be provided compared to other solutions which completely terminates the X2 protocol within the proxy. This approach also requires fewer changes to the behaviour of the base stations. In addition, this approach solves technical shortcomings that a pure transport level solution such as an SCTP concentrator cannot solve, such as the problem of dynamic management of SCTP streams upon new neighbouring base station relations needing to be added or removed, or mapping SCTP streams onto the base station identifier.
A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method performed by a proxy node (40) of transferring messages between base stations (20, 30) of a wireless telecommunications network, said method comprising the steps of:
receiving an X2 Application Protocol message within an incoming X2 interface IP packet over an X2 interface from a source base station;
extracting, from said X2 Application Protocol message, target base station identity information identifying a target base station;
routing said X2 Application Protocol message to said target base station, said X2 Application Protocol message being carried within an outgoing X2 interface IP packet having a target IP address derived from said target base station identity information; and
maintaining a direct X2 Application Protocol association between said source base station and said target base station, said X2 Application Protocol association is being carried over two SCTP associations, one from said source base station to said proxy node and one from said proxy node to said target base station.

2. The method of claim 1, wherein said step of extracting comprises extracting said target IP address from said target base station identity information and said step of routing comprises routing said X2 Application Protocol message carried within said outgoing X2 interface IP packet having said target IP address to said target base station.

3. The method of claim 1 or 2, comprising the step of maintaining a lookup table matching a target base station identity information with a corresponding target base station IP addresses, said step of routing comprises identifying said target IP address from said lookup table using said target base station identity information and routing said X2 Application Protocol message carried within said outgoing X2 interface IP packet having said target IP address to said target base station.

4. The method of any preceding claim, wherein the step of receiving comprises receiving the incoming X2 Application Protocol message at a proxy node having an IP address included within the X2 interface IP packet carrying the incoming X2 Application Protocol message.

5. The method of any preceding claim, comprising the step of querying an external lookup table to obtain the target base station IP address in response to providing the target base station identity information.

6. The method of claim 5, comprising the step of receiving the target base station IP address for inclusion in the lookup table during transfer of S1 interface messages with the target base station.

7. A proxy node (40) operable to transfer messages between base stations (eNB; HeNB) of a wireless telecommunications network, said proxy comprising:
reception logic operable to receive an X2 Application Protocol message within an incoming X2 interface IP packet over an X2 interface from a source base station;
extraction logic operable to extract, from said X2 Application Protocol message, target base station identity information identifying a target base station;
routing logic operable to route said X2 Application Protocol message to said target base station, said X2 Application Protocol message being carried within an outgoing X2 interface IP packet having a target IP address derived from said target base station identity information; and
interface logic operable to maintain a direct X2 Application Protocol association between the source base station and the target base station, the X2 Application Protocol association is being carried over two SCTP associations, one from the source base station to the proxy node and one from the proxy node to the target base station.

8. A computer program product operable, when executed on a computer, to perform the method steps of any one of claims 1 to 6.

## Patentansprüche

1. Von einem Proxy-Knoten (40) ausgeführtes Verfahren zum Übertragen von Nachrichten zwischen Basisstationen (20, 30) eines drahtlosen Telekommunikationsnetzes, wobei besagtes Verfahren die folgenden Schritte umfasst:
den Empfang einer X2-Anwendungsprotokoll-Nachricht von einer Quellbasisstation in einem eingehenden X2-Schnittstellen-IP-Paket an einer X2-Schnittstelle;
das Extrahieren der Zielbasisstations-Identitätsinformationen zur Identifikation einer Zielbasisstation aus besagter X2-Anwendungsprotokoll-Nachricht;
das Routen besagter X2-Anwendungsprotokoll-Nachricht an besagte Zielbasisstation, wobei besagte X2-Anwendungsprotokoll-Nachricht in einem ausgehenden X2-Schnittstellen-IP-Paket transportiert wird, das eine Ziel-IP-Adresse hat, die von besagten Zielbasisstations-Identitätsinformationen abgeleitet wurden; und
das Aufrechterhalten einer X2-Anwendungsprotokoll-Assoziation zwischen besagter Quellbasisstation und besagter Zielbasisstation, wobei besagte X2-Anwendungsprotokoll-Assoziation über zwei SCTP-Assoziationen abgewickelt wird, eine von diesen von der besagten Quellbasisstation zu besagtem Proxy-Knoten und die andere von besagtem Proxy-Knoten an besagte Zielbasisstation.

2. Das Verfahren nach Anspruch 1, wobei besagter Schritt des Extrahierens das Extrahieren der besagten Ziel-IP-Adresse aus besagten Zielbasisstations-Identitätsinformationen umfasst, und wobei besagter Schritt des Routens das Routen der besagten X2-Anwendungsprotokoll-Nachricht, die in besagtem X2-Schnittstellen-IP-Paket mit besagter Ziel-IP-Adresse transportiert wird, an besagte Zielbasisstation umfasst.

3. Das Verfahren nach Anspruch 1 oder 2, den Schritt des Pflegens einer Lookup-Tabelle umfassend, welche Basisstations-Identitätsinformationen mit entsprechenden Zielbasisstations-IP-Adressen abgleicht, wobei besagter Schritt des Routens umfasst, unter Verwendung der besagten Zielbasisstations-Identitätsinformationen besagte Ziel-IP-Adressen in besagter Lookup-Tabelle zu identifizieren und besagte X2-Anwendungsprotokoll-Nachricht, die in besagtem ausgehendem X2-Schnittstellen-IP-Paket mit der besagten Ziel-IP-Adresse transportiert wird, an besagte Zielbasisstation zu routen.

4. Das Verfahren nach einem jeglichen der vorgenannten Ansprüche, wobei der Schritt des Empfangens umfasst, die eingehende X2-Anwendungsprotokoll-Nachricht an einem Proxy-Knoten zu empfangen, wobei in dem X2-Schnittstellen-IP-Paket, welches die eingehende X2-Anwendungsprotokoll-Nachricht transportiert, eine IP-Adresse enthalten ist.

5. Das Verfahren nach einem jeglichen der vorgenannten Ansprüche, den Schritt des Abfragens einer externen Lookup-Tabelle umfassend, um in Reaktion auf das Bereitstellen der Zielbasisstations-Identitätsinformationen die Zielbasisstations-IP-Adresse erhalten.

6. Das Verfahren nach Anspruch 5, während der Übertragung von S1-Schnittstellennachrichten mit der Zielbasisstation den Schritt des Empfangens der Zielbasisstations-IP-Adresse umfassend, um diese in die Lookup-Tabelle aufzunehmen.

7. Ein Proxy-Knoten (40), ausgelegt für das Übertragen von Nachrichten zwischen Basisstationen (eNB; HeNB) eines drahtlosen Telekommunikationsnetzes, wobei besagter Proxy umfasst:
eine Empfangslogik für den Empfang einer X2-Anwendungsprotokoll-Nachricht von einer Quellbasisstation in einem eingehenden X2-Schnittstellen-IP-Paket an einer X2-Schnittstelle;
eine Extraktionslogik für das Extrahieren der Zielbasisstations-Identitätsinformationen zur Identifikation einer Zielbasisstation aus besagter X2-Anwendungsprotokoll-Nachricht;
eine Routinglogik für das Routen besagter X2-Anwendungsprotokoll-Nachricht an besagte Zielbasisstation, wobei besagte X2-Anwendungsprotokoll-Nachricht in einem ausgehenden X2-Schnittstellen-IP-Paket transportiert wird, das eine Ziel-IP-Adresse hat, die von besagten Zielbasisstations-Identitätsinformationen abgeleitet wurden; und
eine Schnittstellenlogik, die ausgelegt ist für das Aufrechterhalten einer X2-Anwendungsprotokoll-Assoziation zwischen der Quellbasisstation und der Zielbasisstation, wobei die X2-Anwendungsprotokoll-Assoziation über zwei SCTP-Assoziationen abgewickelt wird, eine von diesen von der Quellbasisstation zu dem Proxy-Knoten und die andere von dem Proxy-Knoten an die Zielbasisstation.

8. Computerprogramm-Produkt, dafür ausgelegt, um bei dessen Ausführung auf einem Computer die Verfahrensschritte gemäß einem beliebigen der Ansprüche 1 bis 6 durchzuführen.

## Revendications

1. Procédé exécuté par un noeud mandataire (40) de transfert de messages entre des stations de base (20, 30) d'un réseau de télécommunication sans fil, ledit procédé comprenant les étapes suivantes :
recevoir un message de protocole d'application X2 dans un paquet IP d'interface X2 entrant sur une interface X2 à partir d'une station de base source ;
extraire, à partir dudit message de protocole d'application X2, des informations d'identité de la station de base cible identifiant une station de base cible ;
acheminer ledit message de protocole d'application X2 vers ladite station de base cible, ledit message de protocole d'application X2 étant transporté dans un paquet IP d'interface X2 sortant ayant une adresse IP cible dérivée desdites informations d'identité de la station de base cible ; et
maintenir une association de protocole d'application X2 directe entre ladite station de base source et ladite station de base cible, ladite association de protocole d'application X2 est transportée sur deux associations SCTP, une entre ladite station de base source et ledit noeud mandataire et une entre ledit noeud mandataire et ladite station de base cible.

2. Procédé selon la revendication 1, dans lequel ladite étape d'extraction comprend l'extraction de ladite adresse IP cible à partir desdites informations d'identité de la station de base cible et ladite étape de routage comprend l'acheminement dudit message de protocole d'application X2 transporté dans ledit paquet IP d'interface X2 sortant ayant ladite adresse IP cible vers ladite station de base cible.

3. Procédé selon la revendication 1 ou 2, comprenant l'étape de maintien d'une table de consultation mettant en correspondance des informations d'identité de la station de base cible avec des adresses IP de la station de base cible correspondantes, ladite étape d'acheminement comprend l'identification de ladite adresse IP cible à partir de ladite table de consultation en utilisant lesdites informations d'identité de la station de base cible et l'acheminement dudit message de protocole d'application X2 transporté dans ledit paquet IP d'interface X2 sortant ayant ladite adresse IP cible vers ladite station de base cible.

4. Procédé selon l'une quelconque des revendications précédentes, dans lequel l'étape de réception comprend la réception du message de protocole d'application X2 entrant au niveau d'un noeud mandataire ayant une adresse IP incluse dans le paquet IP d'interface X2 transportant le message de protocole d'application X2 entrant.

5. Procédé selon l'une quelconque des revendications précédentes, comprenant l'étape d'interrogation d'une table de consultation externe pour obtenir l'adresse IP de la station de base cible en réponse à la fourniture des informations d'identité de la station de base cible.

6. Procédé selon la revendication 5, comprenant l'étape de réception de l'adresse IP de la station de base cible à inclure dans la table de consultation durant le transfert des messages d'interface S1 avec la station de base cible.

7. Noeud mandataire (40) permettant de transférer des messages entre des stations de base (eNB ; HeNB) d'un réseau de télécommunication sans fil, ledit noeud mandataire comprenant :
une logique de réception permettant de recevoir un message de protocole d'application X2 dans un paquet IP d'interface X2 entrant sur une interface X2 à partir d'une station de base source ;
une logique d'extraction permettant d'extraire, à partir dudit message de protocole d'application X2, des informations d'identité de la station de base cible identifiant une station de base cible ;
une logique d'acheminement permettant d'acheminer ledit message de protocole d'application X2 vers ladite station de base cible, ledit message de protocole d'application X2 étant transporté dans un paquet IP d'interface X2 sortant ayant une adresse IP cible dérivée desdites informations d'identité de la station de base cible ; et
une logique d'interface permettant de maintenir une association de protocole d'application X2 directe entre la station de base source et la station de base cible, l'association de protocole d'application X2 est transportée sur deux associations SCTP, une entre la station de base source et le noeud mandataire et une entre le noeud mandataire et la station de base cible.

8. Produit de programme informatique permettant, lorsqu'il est exécuté sur un ordinateur, d'exécuter les étapes du procédé selon l'une quelconque des revendications 1 à 6.
